# EUROPEAN PATENT SPECIFICATION

(11) **EP 2 936 975 B1**
(45) Date of publication and mention of the grant of the patent: **20.09.2017**
(21) Application number: 12891289.6
(22) Date of filing: 24.12.2012
(51) Int. Cl.: A01G 31/00, A01G 31/02

(54) **SYSTEM FOR THE HYDROPONIC CULTIVATION OF PLANTS AND AUTOMATED CULTIVATION METHOD USING SAID SYSTEM**
SYSTEM FÜR DIE HYDROKULTIVIERUNG VON PFLANZEN UND AUTOMATISIERTES KULTIVIERUNGSVERFAHREN MITHILFE DIESES SYSTEMS
SYSTÈME DE CULTURE HYDROPONIQUE DE PLANTES ET PROCÉDÉ DE CULTURE AUTOMATISÉ COMPRENANT L'UTILISATION DUDIT SYSTÈME

(43) Date of publication of application: 28.10.2015
(73) Proprietor: Blanquet, Philippe, 31500 Tudela - Navarra (ES)
(72) Inventor: Blanquet, Philippe, 31500 Tudela - Navarra (ES)
(74) Representative: Schäfer, Matthias W.
(86) International application number: PCT/ES2012/070908
(87) International publication number: WO 2014/102400

(56) References cited:
- EP-A1- 0 038 709
- EP-A1- 0 192 482
- GB-A- 2 056 833
- US-A- 4 035 950
- US-A- 4 392 328
- US-A- 4 392 328

## Description

### OBJECT OF THE INVENTION

As the title of the invention indicates, the object of the present invention is both a system for hydroponic cultivation of plants and an automated cultivation procedure that uses the aforesaid system.

Hydroponics or hydroponic agriculture is a method used to grow plants using mineral solutions instead of agricultural soil. The roots receive a balanced solution of nutrients dissolved in water with all of the chemical elements that are essential for the development of the plants, that can grow solely in a mineral solution or in an inert medium, such as washed sand, gravel or perlite, among many others.

The present invention is characterized by the special construction features of the elements that form part of the system, making it especially useful for cultivating plants such as chicory, lettuce, lettuce hearts, curly endive, strawberries and similar plants.

The procedure that is the object of the invention is characterized not only in that it employs the system that is the object of the invention but, furthermore, by techniques of planting and harvesting that enable automated cultivation with minimal use of labour.

Thus, the present invention falls within the scope of cultivation of plants and, in particular, within that of accessories such as gutters and similar elements, as well as within the scope of plant cultivating procedures such as those indicated.

### BACKGROUND OF THE INVENTION

In the state of the art to date, there are numerous systems employed for hydroponic cultivation of plants, such as those described in patents ES9902833, ES 2000011186, ES 20040181 7 and EP-A-0038709. Some of these systems use open trays, which do not have a means of retaining the plants, others feature a removable cover in which a series of perforations have been made, with a means of attachment to the rest of the gutter.

However, all the known systems present aspects that can be improved since none of them allow the plants to be firmly gripped, without being damaged, while also allowing the automation of the cultivating processes, in particular, the tasks of planting, cleaning and harvesting, and also they are systems based on trays that are complicated to manufacture and clean, either because of their shape or because of the parts they require.

Furthermore, in hydroponic plant cultivating processes the degree of automation that has been achieved does not completely cover all of the actions involved in cultivation.

Hence, the object of the present invention is to develop a system for the hydroponic cultivation of plants that overcomes the drawbacks indicated, while improving crop processes, developing for this purpose a system and a procedure such as that which is now described and which is essentially reflected in the first claim.

### DESCRIPTION OF THE INVENTION

An object of the present invention is a system for the hydroponic cultivation of plants according to claim 1. In the first embodiment, the gutter in one single piece has the necessary structural features to secure the plant with the necessary force to ensure its correct positioning in relation to the gutter, without the plant being damaged, and moreover it also has a design that ensures the structural stability of the unit.

The gutter is made in one single piece, having the shape of a triangle, preferably an isosceles triangle, that is, with a base and two lateral sides that converge at their top end without forming a closed piece, i.e. the ends of the lateral sides can be separated, allowing access to the interior space defined by the gutter.

Each of the lateral sides has a first bottom section, which is joined to the base and is of the same thickness as the base, said thickness being greater than the thickness of the second section or top section of each one of the lateral sides.

The lesser thickness of the top section or second section of the lateral sides allows such a force to be exerted on the stem of a plant, once placed between the top ends of these top sections, that it ensures its correct verticality, said characteristic ensuring correct handling in an automated way; furthermore, this force that is exerted on the stem of the plants is such that it does not in any way damage the plants.

Furthermore, the greater thickness of the base and the first section or bottom section of the lateral sides, ensures the structural stability of the unit with regard to automated tasks of planting and harvesting plants. If the thickness of the gutter, despite its shape, were to be uniform throughout its structure and if the thickness were to be that of the base, this would cause damage and strangling of plants, and, if the thickness were to be the thinner one such as that of the top ends of the lateral sides, this would weaken the structure of the gutter and not guarantee the securing of plants and recovery of the end triangular shape after planting and harvesting operations.

The automated hydroponic cultivation procedure based on the use of the gutters and system described comprises the stages of:
- Opening the gutter by separating the two lateral sides of the gutter along its whole length, using a machine with rollers or likewise, that as it advances, partially opens the gutter in the section in which it is situated.
- Placing the plants in the open space.
- Advancing of the machine, which causes the closing of the open space and subsequent securing of the plant.

The cultivation procedure can be complemented by tasks to clear unwanted leaves. The system allows working with the gutter in any position and putting it upside down to allow cleaning and handling.

Finally, the process would be completed with the harvesting of the plants that could be carried out via ultrasound or artificial vision, employing pressurized water or other cutting means and the cut plants would fall onto a collecting belt.

Thanks to the use of gutters, parallel feeding in separate lines is possible, which makes for a safer cultivation system as it prevents the transmission of diseases by water and, furthermore, due to the closed shape of the bottom triangular section, instead of employing a feeding system based on the use of an approximately 3cm layer of water, a fine sheet of water can be used, permitting plants to be fed, not by direct contact of the roots with the water contained inside, but rather via the moisture that is generated in the inner space, which provides, on the one hand, water savings and on the other, a reduction in the diseases that plant can get and finally, on a reduction in the water content of the plants.

The identified advantages of cultivating with the gutter that is the object of the invention and the associated procedure are:
- By means of the new development, hydroponic systems can be installed in parallel which will drastically reduce crop losses due to cross-contamination caused by the nutritional solution.
- The system to be developed reduces losses through contact between plants, increasing crop yield.
- The system allows the useful root surface area to be adapted according to growth throughout the forced cycle, changing the planting distance along the gutter depending on the crop and changing the distance between the gutter depending on the development of the crop.
- The use of gutters as the media instead of trays enables the automation of planting, handling, harvesting and product packaging phases, which until now have been carried out manually, allowing consequent reductions in production costs.

### EXPLANATION OF FIGURES.

To add to the description that is given and in order to aid the better understanding of the characteristics of the invention, in accordance with an example of a preferred practical embodiment, a series of drawings, forming an integral part of said description, are included, in which, for illustrative and nonlimiting purposes, the following is represented.
In figure 1 we can see a cross-section of the gutter used in a first embodiment, in accordance with the principles of the invention.
In figure 2 we can see a representation of a hydroponic crop with the gutter shown in figure 1.
Figure 3 shows the means employed in the system, according to a second embodiment in accordance with the principles of the invention.

### PREFERRED EMBODIMENT OF THE INVENTION

In view of the figures, the following is a description of a preferred embodiment of the proposed invention.

The object of the invention is to achieve a hydroponic cultivating system that provides plants with certain means of reception, securing and necessary pressure on the stems of plants, ensuring their positional stability, without the plants suffering any damage and which allows automated cultivation to be carried out.

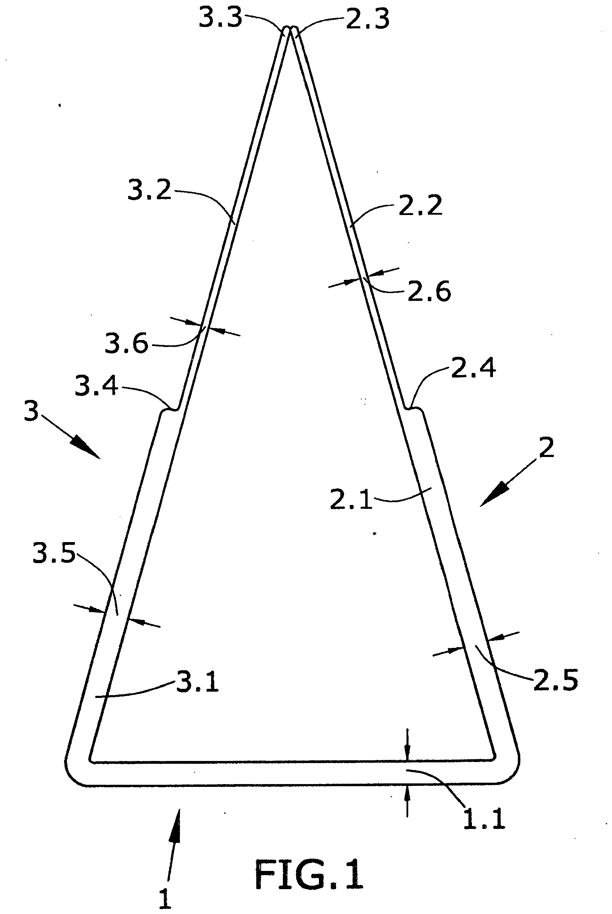

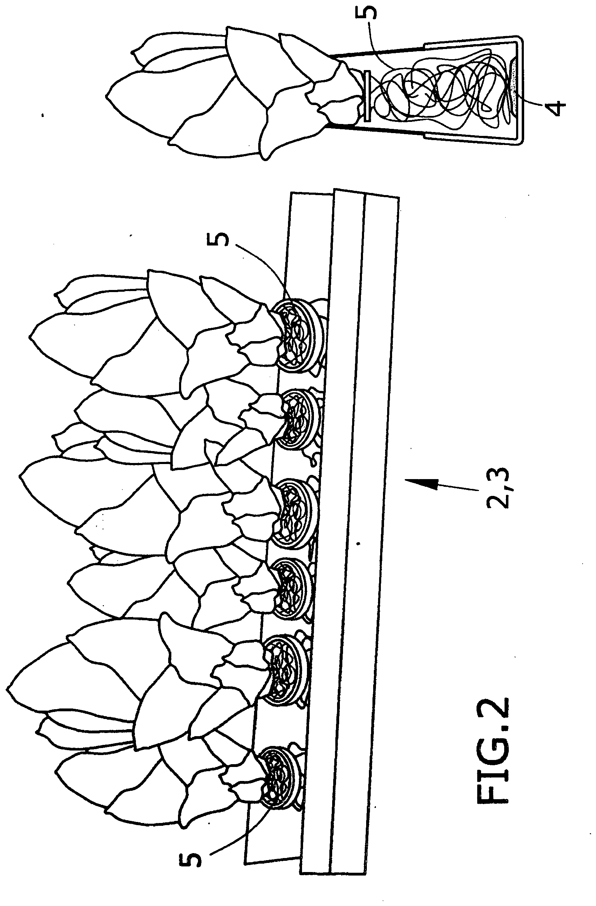

Figures 1 and 2 refer to a first embodiment of the object of the invention, in which the hydroponic plant cultivation system comprises one piece only, which is a gutter for the reception and securing of the plants to be cultivated, and where furthermore this same gutter, due to its construction and design characteristics, has the necessary means to ensure the necessary pressure of the securing means of the gutter. Moreover, as its name indicates, the gutter allows the transportation of water for hydroponic cultivation, along the length of the gutter itself.

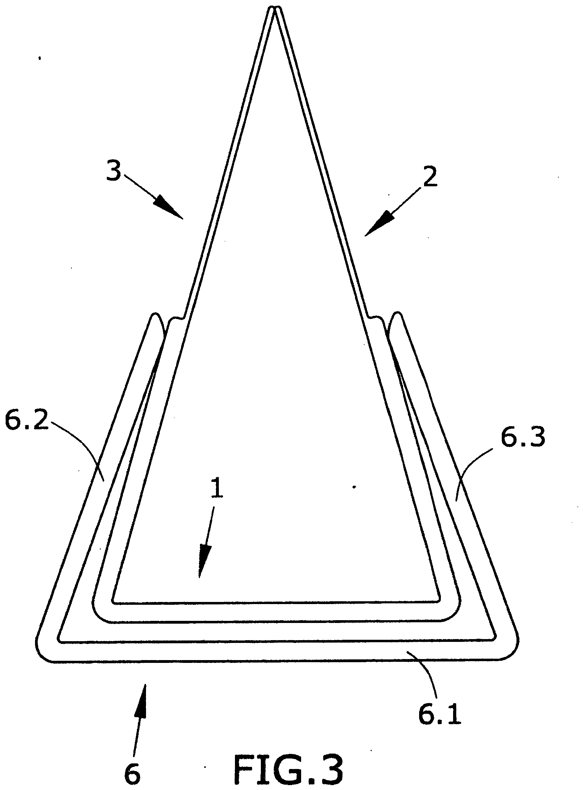

Figure 3 shows a second embodiment based on the same principles of the invention, comprising a gutter for the reception and securing of the plants to be cultivated, which in turn has the means for securing the plant and, furthermore, the means to ensure the necessary pressure of the means of securing the gutter on the plant, which consists of a "U"-shaped gutter comprising a base and two lateral sides arranged in a slanted, converging manner, without the ends touching.

In figure 1 we can see that the cultivation system has one single gutter that presents a general triangular configuration, made in one single piece, the inside space of which is accessible from the top vertex, and sides with a base (1) and two lateral sides (2) and (3), which in a possible embodiment may be equal.

The lateral sides (2) and (3) emerge from the ends of the base (1) and come into contact at their top end, each having a first section or bottom section (2.1) and (3.1) and a second section or top section (2.2) and (3.2), respectively.

The first section or bottom section (2.1) and (3.1) is thicker than the second section or top section (2.2) and (3.2), these construction characteristics and the general geometry of the gutter are those that would act as the means to ensure the pressure of the securing means of the gutter on the base or stem of the plants.

The converging lateral sides (2) and (3) converge at their top end (2.3) and (3.3) respectively, without forming a closed piece, said ends being able to be separated. The top end of said top sections or second sections of the lateral sides have a curved inner face in order to prevent any cuts being produced on the plant, becoming the means of securing the plant by its base or stem, the density of plants per linear metre of plantation being able to be varied unlimitedly.

The proportion between the width of the base and the height of lateral sides will be any that adapts to the characteristics of the type of crop, there being no limitation to said proportion.

In a possible embodiment, the thickness (1.1) of the base (1) and the thickness (2.5) and (3.5) of the first sections or bottom sections (2.1) and (3.1) of the lateral sides is of the order of 3 mm, while the thickness (2.6) and (3.6) of the second sections or top sections (2.2) and (3.2.), respectively, is of the order of 1mm.

The first section (2.1) and (3.1) is separated from the second section (2.2.) and (3.2.) and by step (2.4) and (3.4), respectively, which preferably but unrestrictively is disposed on the outer face of each lateral side.

Figure 2 shows a section of a gutter such as the one that is the object of the invention, in which some of the advantages derived from the described construction characteristics can be observed, on the one hand, due to the fact that the top part of the lateral sides has a lesser thickness than the rest, the force exerted on the plant stems is such that it ensures their verticality without damaging the plant. On the other hand, because the rest of the gutter has a greater thickness, its structural strength is ensured during the opening operations for the placing of plants, as well as in handling operations.

Furthermore, given that a closed, triangular section space is formed, the feeding of plants can be performed by means of a thin film of water (4) placed at the bottom of the gutter, said feeding of plants being carried out via the moisture generated in the closed inner space and not necessarily, but preferably, by direct contact of the roots (5) with the bottom of the gutter.

In figure 3 we can see the second embodiment in accordance with the principles of the invention, where the gutter for reception and securing, is a gutter like the one previously shown, that is, with a configuration in the form of an isosceles triangle, open at its top vertex, where the lateral sides do not necessarily need to have a first section or bottom section of a lesser thickness than the second sections or top sections, said thickness being able to be uniform along the whole of its length.

However, in the embodiment shown in figure 3, as well as the gutter for reception and securing of plants, there is a "U"-shaped piece that allows the gutter to be closed, also called the second gutter (6) that ensures that sufficient pressure is exerted on the plants. This second gutter (6) comprises a base (6.1) and two lateral sides (6.2) and (6.3) of a converging disposition, with a slant that is such that once the reception and securing gutter is housed inside it, it exerts pressure on the lateral walls (2) and (3) such that said pressure is transmitted to the ends (2.3) and (3.3), ensuring sufficient pressure on the base or stem of the plant to be cultivated, such that it does not damage it and ensures its vertical growth

Having sufficiently described the nature of the present invention, as well as the means of putting it into practice, it is stated that, within its essentiality, it could be put into practice in other embodiments that differ in their detail to that indicated by way of example, and which will equally achieve the protection that is obtained, provided that they do not alter, change or modify its fundamental principle, as disclosed in the appended claims.

## Claims

1. System for the hydroponic cultivation of plants comprising:
- a gutter for the reception and securing of the plants to be cultivated without the plant being damaged, in which the gutter has:
∘ one base and two lateral sides
∘ some means of securing (3.3, 2.3) the plant by its base or stem, in the space between its roots and top part.
a means of ensuring the necessary pressure of the gutter securing means on the plant at its base or stem, **characterized in that** the gutter has a general triangular configuration, made in one single piece, whose inner space is accessible through the top vertex, and its laterals, having a base (1) and two lateral sides (2, 3), converge at the top end of the gutter, wherein the lateral sides (2, 3) emerge from the ends of the base (1) and come into contact at their top end, wherein either
each one of the lateral sides (2, 3) having a first section or bottom section (2.1, 3.1) and a second section or top section (2.2., 3.2), respectively, where the first section or bottom section (2.1, 3.1) has a greater thickness than the second section of top section (2.2, 3.2), said difference of thickness of the first and second sections of the lateral sides being the means employed to ensure the necessary pressure of the securing means of the gutter on the plant at its base or stem, or
the means employed to ensure the necessary pressure of the securing means of the gutter on the plant at its base or stem comprise a "U"-shaped piece or second gutter (6) that comprises a base (6.1) and two lateral sides (6.2, 6.3) of a converging disposition, with a slant that is such that once the reception and securing gutter is housed inside it, it exerts pressure on the lateral walls (2, 3) such that said pressure is transmitted to the ends (2.3, 3.3), ensuring sufficient pressure on the base or stem of the plant to be cultivated, such that it does not damage it and ensures its vertical growth and subsequent handling.

2. System for hydroponic cultivation of plants, according to claim 1, wherein the means for securing the plant by its base or stem consists of the top end of said top sections or second sections of the lateral sides having a curved inner face (3.3) (3.2).

3. System for hydroponic cultivation of plants, according to claim 1, wherein the first section (2.1, 3.1) of the lateral sides (2, 3) is separated from the second section (2.2., 3.2) by a step (2.4, 3.4) respectively,

4. System for hydroponic cultivation of plants, according to claim 3, wherein said step (2.4, 3.4) is disposed on the outer face of each lateral side.

5. System for hydroponic cultivation of plants, according to any of the previous claims 1 to 4, wherein the thickness (1.1) of the base (1) and the thickness (2.5, 3.5) of the first sections or bottom sections (2.1, 3.1) of the lateral sides is of the order of 3 mm, while the thickness (2.6, 3.6) of the second sections or top sections (2.2, 3.2.), respectively, is of the order of 1 mm.

6. Automated cultivation procedure employing the previously claimed system **characterized in that** comprises the following stages:
- Opening of the gutter by separating the two lateral sides of the gutter along its whole length, using a machine with rollers or likewise that, in the advancing process, partially opens the gutter in the section in which it is situated.
- Placing of the plants in the open space.
- Advancing of the machine, which causes the closing of the open space and subsequent securing of the plant.

7. Automated cultivation procedure, according to claim 6, wherein the cultivating procedure is complemented with tasks for the clearing of unwanted leaves.

8. Automated cultivation procedure, according to claim 6 or 7 wherein the procedure allows the harvesting of plants, which is carried out by ultrasounds or artificial vision, using pressurized water or other methods as the cutting means, and the cut plants falling onto a collection belt.

## Patentansprüche

1. System zur hydroponischen Kultivierung von Pflanzen, umfassend :
eine Rinne zur Aufnahme und Sicherung der zu kultivierenden Pflanzen ohne Beschädigung der Pflanze, bei der die Rinne aufweist:
eine Basis und zwei laterale Seiten,
Mittel zur Befestigung (3.3, 2.3) der Pflanze an ihrer Basis oder an ihrem Stiel, im Zwischenraum zwischen deren Wurzeln und Oberseite;
ein Mittel zum Sicherstellen des notwendigen Drucks der Rinnensicherungsmittel an der Pflanze an ihrer Basis oder an ihrem Stiel, **dadurch gekennzeichnet, dass** die Rinne eine allgemeine Dreiecksform aufweist, die einstückig ausgebildet ist, deren Innenraum durch den oberen Scheitelpunkt zugänglich ist, und deren Lateralen, mit einer Basis (1) und zwei laterale Seiten (2, 3) aufweist, am oberen Ende der Rinne zusammenlaufen, wobei die lateralen Seiten (2, 3) aus den Enden der Basis (1) austreten und an ihrem oberen Ende in Kontakt kommen, wobei entweder
jede der lateralen Seiten (2, 3) einen ersten Abschnitt oder Bodenabschnitt (2.1, 3.1) und einen zweiten Abschnitt oder oberen Abschnitt (2.2, 3.2) aufweist, wobei der erste Abschnitt oder Bodenabschnitt (2.1, 3.1) eine größere Dicke als der zweite Abschnitt des oberen Abschnitts (2.2, 3.2) aufweist, wobei der Dickenunterschied des ersten und des zweiten Abschnitts der lateralen Seiten das Mittel ist, welches zur Gewährleistung des notwendigen Drucks der Sicherungsmittel der Rinne an der Pflanze an ihrer Basis oder an ihrem Stiel eingesetzt ist, oder
die Mittel, die dazu dienen, den notwendigen Druck der Befestigungsmittel der Rinne an der Pflanze an ihrer Basis oder an ihrem Stiel zu gewährleisten, weisen ein "U"-förmiges Teil oder eine zweite Rinne (6) auf, die einen Boden (6.1) und zwei laterale Seiten (6.2, 6.3) mit einer konvergierenden Anordnung aufweisen, mit einer Schräge, die derart ist, dass nach Aufnahme der Aufnahme-und Sicherungsrinne diese auf die Seitenwände (2, 3) Druck ausüben, so dass dieser Druck auf die Enden (2.3, 3.3) übertragen wird , die einen ausreichenden Druck auf die Basis oder den Stiel der zu kultivierenden Pflanze gewährleistet, so dass er ihn nicht beschädigt und dessen vertikales Wachstum und anschliessende Handhabung gewährleistet.

2. System zur hydroponischen Kultivierung von Pflanzen nach Anspruch 1, wobei die Mittel zur Sicherung der Pflanze an ihrer Basis oder an ihrem Stiel aus dem oberen Ende bestehen. wobei das Oberteil oder zweiten Abschnitte der lateralen Seiten eine gekrümmte Innenfläche (3.3) (3.2) aufweisen.

3. System zur hydroponischen Kultivierung von Pflanzen nach Anspruch 1, wobei der erste Abschnitt (2.1, 3.1) der lateralen Seiten (2, 3) von dem zweiten Abschnitt (2.2, 3.2) jeweils durch eine Stufe (2.4, 3.4) separiert ist.

4. System zur hydroponischen Kultivierung von Pflanzen nach Anspruch 3, wobei die Stufe (2.4, 3.4) auf der Außenseite jeder lateralen Seite angeordnet ist.

5. System zur hydroponischen Kultivierung von Pflanzen nach einem der vorhergehenden Ansprüche 1 bis 4, wobei die Dicke (1.1) der Basis (1) und die Dicke (2.5, 3.5) der ersten Abschnitte oder Bodenabschnitte (2.1, 3.1) der lateralen Seiten in der Größenordnung von 3 mm liegt, während die Dicke (2.6, 3.6) der zweiten Abschnitte oder oberen Abschnitte (2.2, 3.2) in der Grössenordnung von 1 mm liegt.

6. Automatisiertes Kultivierungsverfahren unter Verwendung des zuvor beanspruchten Systems, **dadurch gekennzeichnet, dass** es die folgenden Schritte umfasst:
- Öffnen der Rinne durch die Trennung der beiden Seitenwände der Rinne über ihre gesamte Länge unter Verwendung einer Maschine mit Rollen oder ähnlichem, die im Vorschubprozess die Rinne teilweise in dem Abschnitt, in dem sie sich befindet, öffnet;
- Platzieren der Pflanzen im Freiraum;
- Vorschub der Maschine, was das Schließen des Freiraums und anschließende Sicherung der Pflanze bewirkt.

7. Automatisiertes Kultivierungsverfahren nach Anspruch 6, wobei das Kultivierungsverfahren mit Aufgaben zum Entfernen von unerwünschten Blättern ergänzt wird.

8. Automatisiertes Kultivierungsverfahren nach Anspruch 6 oder 7, wobei das Verfahren das Ernten von Pflanzen erlaubt, das durch Ultraschall oder künstliche Sicht, unter Verwendung von Druckwasser oder anderen Verfahren als Schneidmittel durchgeführt wird, und wobei die geschnittenen Pflanzen auf ein Sammelband fallen.

## Revendications

1. Un système pour la culture hydroponique de plantes comprenant :
- une gouttière pour la réception et la sécurisation des plantes à cultiver et permettant d'éviter que les plantes ne soient endommagées, étant précisé que la gouttière présente :
- une base et deux côtés latéraux
- des moyens de sécurisation (3.3, 2.3) de la plante par sa base ou sa tige, dans l'espace entre les racines et la partie supérieure
un moyen pour assurer la pression nécessaire des moyens de sécurisation de la gouttière sur la plante à la base ou la tige, **caractérisé en ce que** la gouttière présente une configuration globale triangulaire, réalisée en une seule pièce, avec un espace interne accessible par le sommet, et les parties latérales présentant une base (1) et deux côtés latéraux (2,3) convergent au sommet de la gouttière, étant précisé que les côtés latéraux (2,3) émergent des extrémités de la base (1) et entrent en contact à leur sommet, étant précisé que, soit
chacun des côtés latéraux (2,3) présentant une première section ou section inférieure (2.1, 3.1) et une seconde section ou section supérieure (2.2 , 3.2), respectivement, là où la première section ou section inférieure (2.1, 3.1) présente une épaisseur supérieure à celle de la seconde section ou section inférieure (2.2, 3.2) des côtés latéraux, constitue le moyen employé pour assurer la pression nécessaire des moyens de sécurisation de la gouttière sur la plante à la base ou la tige, soit
les moyens employés pour assurer la pression nécessaire des moyens de sécurisation de la gouttière sur la plante à la base ou la tiges comprennent une pièce en forme de U ou une seconde gouttière (6) qui comprend une base (6.1) et deux côtés latéraux (6.2, 6.3) disposés de sorte à converger, avec une inclinaison qui est telle que la gouttière de réception et de sécurisation est logée à l'intérieur, elle exerce une pression sur les côtés latéraux (2, 3) de sorte que ladite pression est transmise aux extrémités (2.3, 3.3), assurant d'exercer suffisamment de pression sur la base ou la tige de la plante à cultiver, de sorte à ne pas l'endommager et à assurer sa croissance verticale et traitement ultérieur.

2. Système pour la culture hydroponique de plantes selon la Revendication 1, étant précisé que le moyen de sécurisation de la plante par sa base ou sa tige se compose de l'extrémité supérieure desdites sections supérieures ou secondes sections des côtés latéraux avec une face interne incurvée (3.3) (3.2).

3. Système pour la culture hydroponique de plantes selon la Revendication 1, étant précisé que la première section (2.1, 3.1) des côtés latéraux (2, 3) est séparée de la seconde section (2.2, 3.2) par un cran (2.4, 3.4) respectivement.

4. Système pour la culture hydroponique de plantes selon la Revendication 3, étant précisé que ledit cran (2.4, 3.4) est disposé sur la face extérieure de chaque côté latéral.

5. Système pour la culture hydroponique de plantes selon l'une quelconque des Revendications précédentes, étant précisé que l'épaisseur (1.1) de la base (1) et l'épaisseur (2.3, 3.5) des premières sections ou sections inférieures (2.1, 3.1) des côtés latéraux est d'environ 3 mm, tandis que l'épaisseur (2.6, 3.6) des secondes sections ou sections supérieures (2.2, 3.2), respectivement, est d'environ 1 mm.

6. Procédé de culture automatisé utilisant le système revendiqué ci-dessus **caractérisé en ce qu'**il comporte les étapes suivantes consistant à :
ouvrir la gouttière en séparant les deux côtés latéraux de la gouttière le long de toute sa longueur, en utilisant une machine avec des rouleaux ou un dispositif similaire qui, en avançant, ouvre partiellement la gouttière dans la section dans laquelle il est situé.
Placer les plantes dans l'espace ouvert.
Faire avancer la machine, entraînant ainsi la fermeture de l'espace ouvert et la sécurisation ultérieure de la plante.

7. Procédé de culture automatisé selon la Revendication 6 étant précisé que le procédé de culture est complété par des tâches d'arrachage des feuilles non désirées.

8. Procédé de culture automatisé selon la Revendication 6 ou 7 étant précisé que le procédé permet la récolte de plantes, qui est réalisée par ultrasons ou par vision artificielle, en utilisant de l'eau pressurisée ou d'autres procédés comme moyens de coupe, et les plantes coupées tombent sur un tapis de récupération.
